Europäisches Patentamt

European Patent Office

Office européen des brevets

(11) Numéro de publication: **0 165 356**

**A1**

## (12) DEMANDE DE BREVET EUROPEEN

(21) Numéro de dépôt: **84401039.7**

(22) Date de dépôt: **22.06.84**

(51) Int. Cl.⁴: **A 01 G 9/14**

(43) Date de publication de la demande:
**27.12.85 Bulletin 85/52**

(84) Etats contractants désignés:
**BE DE GB IT LU NL**

(71) Demandeur: **de Bentzmann, Bertrand Louis
Bragueze Roumagne
F-47800 Miramont de Guyenne(FR)**

(72) Inventeur: **de Bentzmann, Bertrand Louis
Bragueze Roumagne
F-47800 Miramont de Guyenne(FR)**

(74) Mandataire: **Moulines, Pierre et al,
Cabinet BEAU de LOMENIE 55, rue d'Amsterdam
F-75008 Paris(FR)**

(54) **Tablette chauffante pour la culture de plantes en serres.**

(57) Tablette chauffante pour la culture de plantes en serres.

Elle comprend un moyen de support (1, 2, 3, 8) reposant sur le sol et sur lequel sont disposés plusieurs faisceaux (9, 9a, 9b) de tubes dans lesquels circule un fluide de chauffage, les dits faisceaux (9, 9a, 9b) étant fixés sous un bac (11) dans lequel sont disposés les plantes (7).

L'invention est utilisée dans les serres pour la culture des plantes.

Fig.2

EP 0 165 356 A1

Croydon Printing Company Ltd.

Tablette chauffante pour la culture de plantes en serres.

La présente invention a pour objet une tablette chauffante pour la culture de plantes en serres.

On connaît des dispositifs de chauffage qui sont disposés sur le sol au pied des plantes cultivées en serre pour le réchauffage du substrat et son maintien à des températures permettant une optimisation de la fermentation.

Ces dispositifs sont constitués notamment d'un tapis qui porte des conduits dans lesquels circule un fluide de réchauffage et qui est disposé sur le sol.

La présente invention a pour objet un dispositif de réchauffage de ce type monté sur des tablettes pour l'utilisation dans l'horticulture.

Conformément à la présente invention, la tablette comprend un moyen de support reposant sur le sol et sur lequel sont disposés plusieurs faisceaux de tubes dans lesquels circule un fluide de chauffage, lesdits faisceaux étant fixés sous un bac dans lequel sont disposées les plantes.

Cette disposition permet d'obtenir une excellente répartition des températures sur toute la surface de la tablette et, parce qu'elle est cohérente avec le support, la diffusion de la chaleur est optimisée à l'extérieur du support en polyester.

Par ailleurs, le bac peut être utilisé pour l'arrosage des plantes par subirrigation et à cet effet il présente des rainures longitudinales qui aboutissent à leurs deux extrémités à un collecteur de récupération des eaux.

D'autres caractéristiques et avantages de l'invention seront mieux compris à la lecture de la description qui va suivre d'un mode de réalisation et en se référant aux dessins annexés, sur lesquels :

- la figure 1 est une vue en élévation d'une tablette pour l'horticulture suivant l'invention;

- la figure 2 est une vue en perspective et en coupe d'un mode de réalisation de la tablette suivant l'invention.

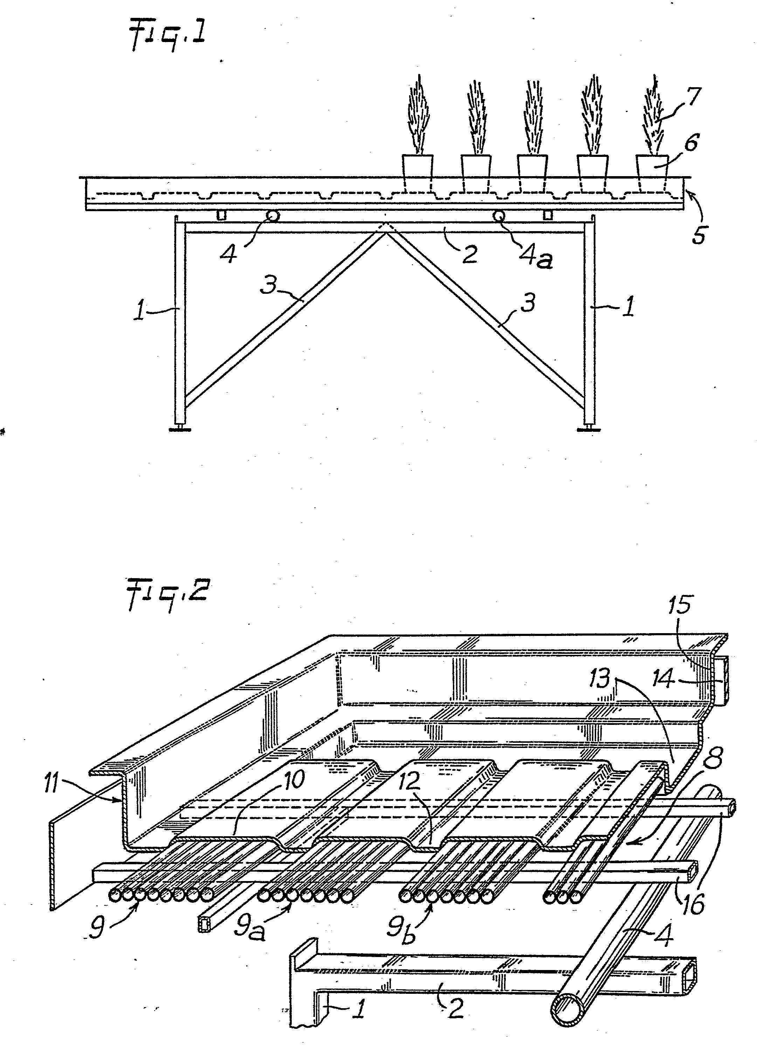

A la figure 1, on a représenté un moyen de support qui est constitué de pieds 1 réglables en hauteur qui sont reliés entre eux par des traverses horizontales 2 et par des jambes de renfort 3. Sur les traverses 2, est montée par l'intermédiaire d'organes de roulement ou tubes 4, 4a une tablette 5 sur laquelle sont disposés des pots 6 contenant des plantes 7.

La tablette 5 est constituée d'une grille en aluminium 8 sur lequel sont disposés plusieurs faisceaux 9, 9a, 9b de tubes dans lesquels circule un fluide de réchauffage, notamment de l'eau. Les faisceaux de tubes de chauffage 9 sont fixés sous le fond 10 d'un bac 11 qui est notamment en polyester armé de fibres de verre. Sur le fond 10 du bac, sont disposés les pots 6 des plantes 7 et, entre les logements longitudinaux recevant les faisceaux de tubes 9, le fond 10 présente des rainures ou rigoles 12 pour l'écoulement de l'eau d'arrosage des plantes. Les rainures ou rigoles 12 débouchent à chaque extrémité dans un collecteur 13 conformé dans le fond du bac pour la récupération des eaux d'arrosage.

La grille 8 présente des bords 14 contre lesquels viennent en appui les rebords 15 du bac 9 afin de positionner celui-ci.

La grille 8 est constituée de profilés 16 régulièrement espacés qui sont en appui sur les organes de roulement 4, 4a et qui assurent le raidissement du coffre et de la table. Pour le chauffage des plantes, les faisceaux de tubes 9 peuvent être constitués chacun d'un tapis en matière plastique présentant des conduits de fluide chauffant qui sont reliés à des tuyaux pour l'arrivée et le retour du fluide chauffant, ledit tapis étant fixé sur la face inférieure du fond 10 du bac 11.

Bien entendu, l'invention n'est pas limitative et l'homme de l'art pourra y apporter des modifications sans pour cela sortir du domaine de l'invention.

3
<u>R E V E N D I C A T I O N S</u>

1.          Tablette chauffante pour la culture de plantes en serres comprenant un moyen de support (1, 2, 3, 8) reposant sur le sol et sur lequel sont disposés plusieurs faisceaux (9, 9a, 9b) de tubes dans lesquels circule un fluide de chauffage, caractérisé en ce que les faisceaux de tubes (9) sont constitués chacun d'un tapis en matière plastique présentant des conduits de circulation du fluide et qui est fixé sur la face inférieure du fond (10) d'un bac (11) dans lequel sont disposées les plantes (7), le fond (10) dudit bac (11) présentant entre les faisceaux de tubes (9, 9a, 9b) disposés longitudinalement des rainures (12) pour l'écoulement de l'eau d'arrosage des plantes et qui débouchent à chaque extrémité dans un collecteur (13) conformé dans ledit fond du bac (11).

2.          Tablette chauffante suivant la revendication 1, caractérisée en ce que les faisceaux de tubes (9, 9a, 9b) de chauffage et le bac (11) recevant les plantes sont disposés sur une grille (8) qui est monté par l'intermédiaire d'organes de roulement (4, 4a) sur des traverses (2) d'un organe de support muni de pieds (1) réglables en hauteur.

3.          Talette chauffante suivant la revendication 1, caractérisée en ce que le bac (11) recevant les plantes est en polyester armé de fibres de verre.

Fig.1

Fig.2

Office européen
des brevets

**RAPPORT DE RECHERCHE EUROPEENNE**

**0165356**
Numéro de la demande

EP 84 40 1039

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | DE-A-2 812 324 (JENSEN) <br> * page 6, paragraphe 3 - page 8, paragraphe 2; figures 1,2 * | 1 | A 01 G 9/14 |
| Y | NL-A-8 004 859 (ROMACA CORP.) <br> * page 1, ligne 29 - page 2, ligne 10; figure * | 1 | |
| A | FR-A-2 467 539 (OTTE-BETON) <br> * page 3, ligne 6 - page 4, ligne 13; figures 1,2 * | 2 | |
| A | FR-A-2 481 059 (CANAT) <br> * revendication 9 * | 3 | |

DOMAINES TECHNIQUES
RECHERCHES (Int. Cl. ³)

A 01 G 9/14

Le présent rapport de recherche a été établi pour toutes les revendications

| Lieu de la recherche | Date d'achèvement de la recherche | Examinateur |
|---|---|---|
| LA HAYE | 23-08-1984 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82